# EUROPEAN PATENT SPECIFICATION

(11) **EP 1 564 502 B1**
(45) Date of publication and mention of the grant of the patent: **02.07.2008**
(21) Application number: 04030447.9
(22) Date of filing: 22.12.2004
(51) Int. Cl.: F24F 13/20, F24F 13/32

(54) **Wall sleeve for an air conditioning system**
Einschubrahmen für eine Klimaanlage
Applique mural pour un appareil de conditionnement d'air

(30) Priority: 17.02.2004 IT MI20040262
(43) Date of publication of application: 17.08.2005
(73) Proprietor: AERMEC S.p.A., 37040 Bevilacqua (Verona) (IT)
(72) Inventor: Riello, Valerio Giordano, 37040 Bevilacqua (VR) (IT)
(74) Representative: Perani, Aurelio

(56) References cited:
- US-A- 3 217 450
- US-A- 3 974 661
- US-A- 4 811 570
- US-B1- 6 345 513

## Description

This invention relates to a wall-embeddable module for housing a terminal of an air conditioning system, in particular a module provided with a structure for creating a space or cavity in a part of a residential or commercial building in such a way as to allow a terminal of an air conditioning system according to claim 1 to be housed therein.

At the present time the terminals of air conditioning systems, whether fan convectors or thermal convectors, are often regarded as a "foreign body" in comparison with the other furniture and other objects comprising the fittings of a room, as if it were something which is not to be shown and has to be hidden.

In fact, fan convectors (or any other terminals) are widely used in applications intended for the service sector, where they are regarded as being less invasive in relation to the fittings, but so far these have not become so widespread in installations intended for residential premises.

The disadvantage frequently encountered is their size, often aggravated by a featureless design.

In an attempt to overcome this problem manufacturers have included in their product lines air conditioning equipment which is capable of being installed horizontally so that it can be hidden completely in false ceilings or the like so that it cannot be seen by users.

However, even this arrangement gives rise to problems, such as difficulties of access for carrying out maintenance work, little possibility or directing the delivery flow, etc.

The possibility of creating a space (or cavity or niche) in a dividing wall (or loadbearing wall) of a size sufficient to house the terminal of the air conditioning system completely or partially, that is capable of housing the terminal of the said system and hiding it in a well-defined space in the wall, is also known.

An example of prior art is shown in US-B1-6 345 513 which discloses a module structure capable of receiving a terminal of an air conditioning system in a removable way. The module structure is in form of a stand-alone frame which is only positioned inside an installation space provided in wall. According to the disclosure of the above mentioned document, the module does not take part as an embeddable structure in the finishing operations of the installation space.

Another obvious example is that of a radiator central heating unit which is commonly installed in dwellings for private use.

In fact the central heating unit is housed in a space which is capable of housing it at least partially.

However the creation of a space in the course of new building as well as refurbishment can give rise to a number of problems such as, for example, the need to use specialist labour which is capable of producing perfectly square corners, and flat and vertical surfaces which are perfectly parallel and at right angles to the ground respectively.

Also, when it is not known what terminal must be housed within this space the measurements of the latter may vary several times in the course of the work, bringing about an increase in costs and a waste of time.

In view of the state of the art described the object of this invention is to provide an embeddable module which is capable of overcoming these problems.

In accordance with this invention this object is achieved through an embeddable module provided with a structure as claimed in independent claim 1.

Through this invention it is possible to provide a module comprising a wall-embeddable structure capable of completely or partly housing the terminal of an air conditioning system, ensuring an aesthetic result which is at least equivalent to that which would be obtained using specialist labour.

Furthermore, the object of providing useful assistance to builders companies which therefore have a module with an embeddable structure which makes it possible to define the perimeter and corners of a space with maximum accuracy, is also achieved.

The embeddable module according to the invention may in a first embodiment be prefabricated so that it can be immediately installed in a suitable location, or, in a second embodiment, may be constructed from a preformed sheet and therefore be suitable for on-site assembly, and finally, in a third embodiment, may comprise cross-pieces and uprights which are preassembled or which are assembled on site.

The features and advantages of this invention will be apparent from a following detailed description of a practical embodiment which is illustrated purely by way of a non-restrictive example in the appended drawings, in which:
- Figure 1 shows an exploded view in partial cross-section of a known module,
- Figure 2 shows a perspective view of a terminal of a system once the embeddable module and the terminal have been installed,
- Figure 3 shows the accessories for the wholly embedded installation in Figure 2,
- Figure 4 shows the final result of a wholly embedded installation,
- Figure 6 shows the final result of a partly embedded installation,
- Figures 6A and 6B show cross-sectional views along the lines X-X and Y-Y in Figures 4 and 5 respectively,
- Figure 7 shows an embodiment of the structure according to this invention.

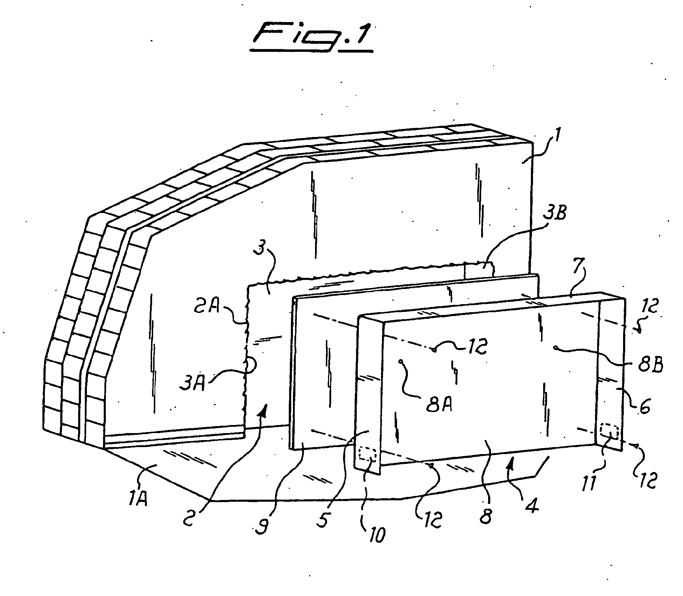

With reference to Figure 1, a wall 1 rising from a base 1A will be seen in partial cross-section.

A space 2 is constructed in wall 1 in a more or less coarse fashion by removing a portion of the material of that wall.

Space 2 has a perimetral edge 2A which may be of a quadrangular shape or an arc of circumference, for example.

Space 2 is defined by a back wall 3 and side walls 3A and 3B, forming a space within which the terminal of the air conditioning system is to be housed.

An embeddable module 4 which takes the form of a structure which may be of the load-bearing type will also be seen to be present in Figure 1.

In particular this structure 4 comprises two vertical walls 5 and 6, a flat or top member 7 and a base 8 of a substantially rectangular or square shape.

Members 5, ..., 8 are assembled together in a manner which is well known to those skilled in the art, such as for example by welding or riveting, etc.

Structure 4 is in the form of a caisson or form work; it may for example be made of sheet metal or plastics materials or board or the like.

Still with reference to Figure 1, it will be further seen that an insulating panel 9 is placed between back wall 3 of space 2 and back wall 8 of the structure 4 of an insulating panel 9.

The purpose of the latter is to limit the propagation of noise, scattered materials or heat. It should be noted that insulating panel 9 is an optional member for the purposes of this invention.

Structure 4 is firmly anchored to insulating panel 9 and therefore back wall 3 through a plurality of fixing means 12 such as for example bolts or similar products.

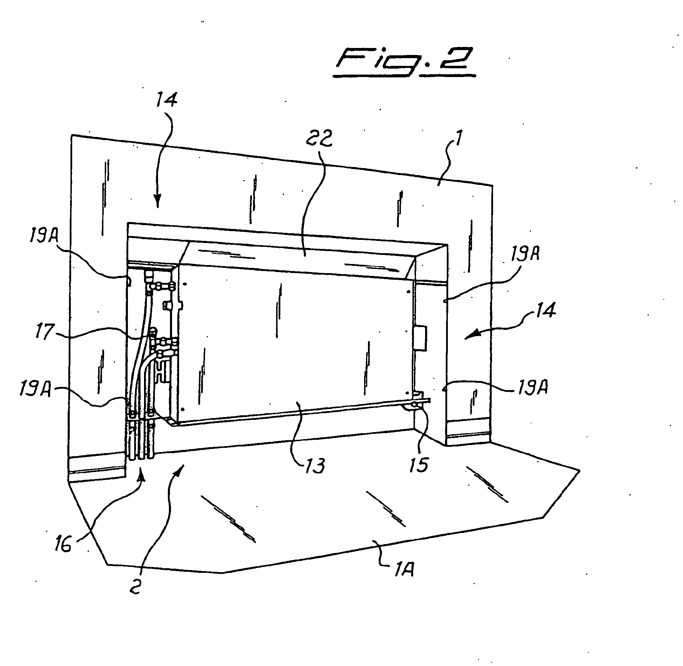

Back panel 8 of structure 4 has holes 8A and 8B to permit the fitting of brackets (not shown in the figures) to support a terminal 13 of an air conditioning system (Figure 2) once this has been inserted into space 2.

Areas 10 and 11 in dashed lines which identify pre-drilled (or pre-cut) portions may be seen at the base of side walls 5 and 6. Once removed these provide a passage for the various hydraulic and/or electrical connections when structure 4 is placed in operation.

Thus once the builder has carried out the excavation to make space 2, insulating panel 9 is first inserted into space 2 followed by structure 4. Finally, in order to render the whole thing solid, the builder assembles structure 4 to back panel 9 and therefore to wall 3 through fixing means 12.

In this way structure 4 forms space 2 in a workmanlike manner, that is it defines space 2 by width, height and depth.

In this way a space 2 having perfectly square corners, flat surfaces and perfectly parallel verticals at right angles to base 1A respectively are obtained.

With reference now to Figure 2, in which the members already described bear the same numbers, it will easily be seen how terminal 13 of the air conditioning system is housed within space 2.

In particular terminal 13 is supported by fixing means 12.

The presence of all the accessory members 14 required for proper functioning of terminal 13, such as for example electrical means 15 and hydraulic means 16, the latter being provided with one or more taps 17 to regulate the outward and return flow (of for example water), may also be seen.

In addition to being of help in defining space 2, structure 4 may also be able to make the work of the builder easier during the stages of finishing the front surface of wall 1.

In other words, close to perimetral edge 2A wall 1 may be finished in a more satisfactory way without the need to use specialist labour, that is a correct surface finish is obtained.

In fact the inevitable spaces which will be formed between perimetral edge 2A of space 2 and the profile of structure 4 can be easily sealed through the insertion of bricks and cement and subsequently finished with rendering and/or plaster so as to form a front surface to wall 1 which is smooth and free of irregularities.

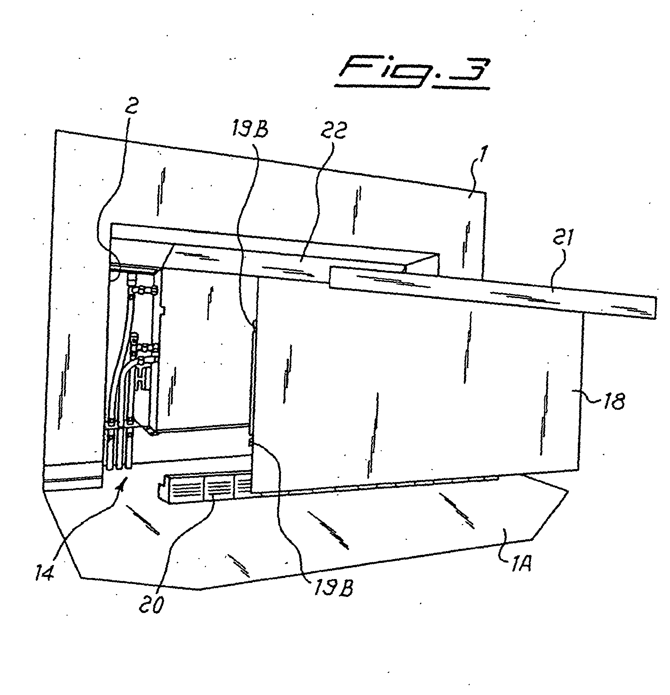

Also, because terminal 13 is completely hidden from the user's view, so as to have the least possible impact on the aesthetics of the finishings, a front finishing panel 18 is advantageously provided as illustrated in Figure 3.

This front panel 18 can be fitted in front of terminal 13 using suitable fixing means 19.

In the present embodiment these fixing means 19 take the form of a plurality of pins 19A which can be inserted into corresponding seats 19B.

Pins 19A are preferably positioned on the perimetral edge 2A of space 2, while seats 19B are located at the edges of front finishing panel 18.

Front panel 18 may further be provided with an inner lining (not shown in the figures) to insulate terminal 13 from the surrounding environment thermally and/or acoustically.

In addition to this, in order to ensure that there is correct air circulation a ventilation grille 20 is provided in a low position together with a deflecting baffle 21 in an upper position.

Ventilation grille 20 may extend over the entire transverse dimension of front panel 18 or as an alternative it may extend over only a portion of the transverse dimension of said panel 18.

Deflecting baffle 21 may be operated manually or electrically.

Terminal 13 may also have an air damper 22 to assist the air drawn in and conditioned to flow out.

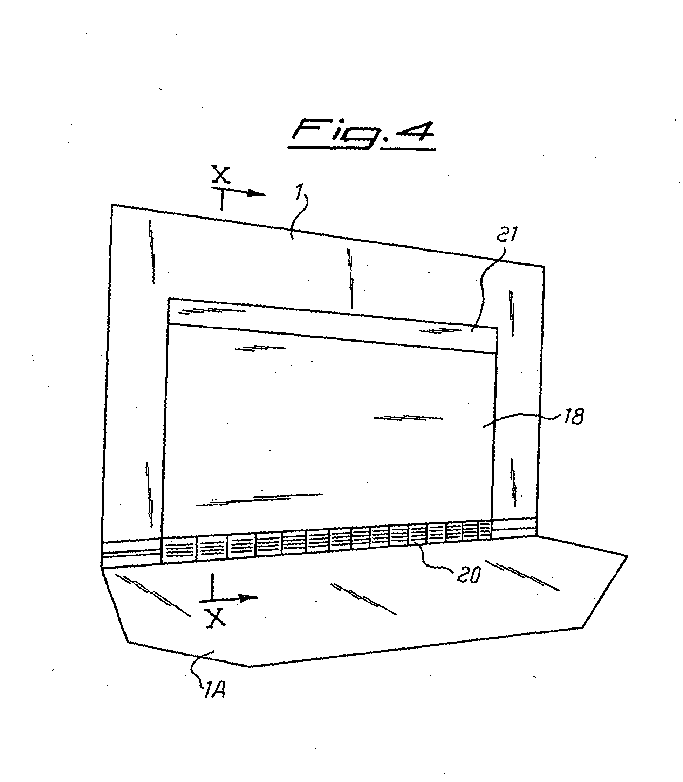

The final result of installing structure 4, terminal 13 and panel 18, grille 20 and deflecting baffle 21 is illustrated in Figure 4.

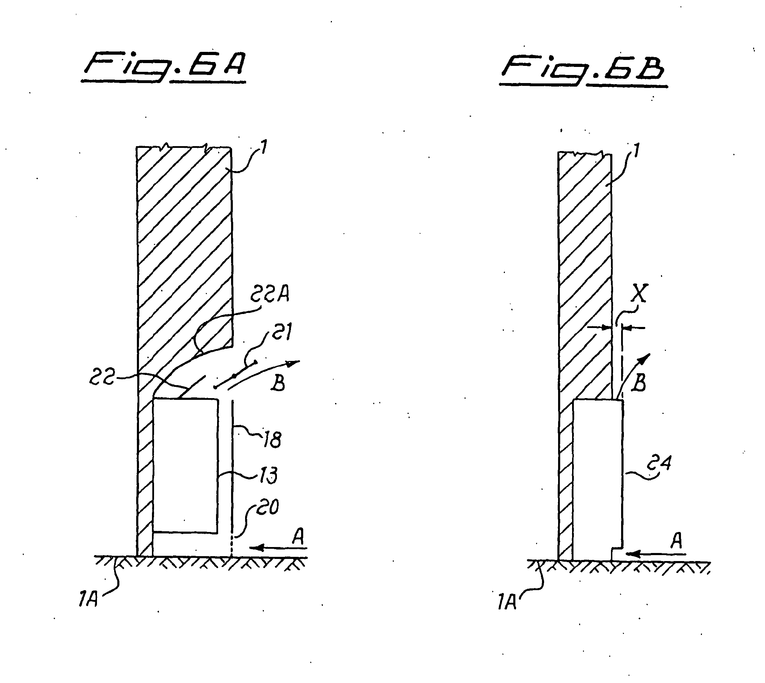

With reference to Figure 6A, which shows a cross-sectional view of Figure 4, it will be seen that the flow of air drawn in (indicated in the figure by arrow A) passes through grille 20, is conditioned in terminal 13, directed towards damper 22 and subsequently expelled (indicated by arrow B in the figure) past fence 21.

The presence of a further delivery mean 22A which is capable of further assisting the outflow of air without causing unacceptable noise will also be noted in Figure 6A.

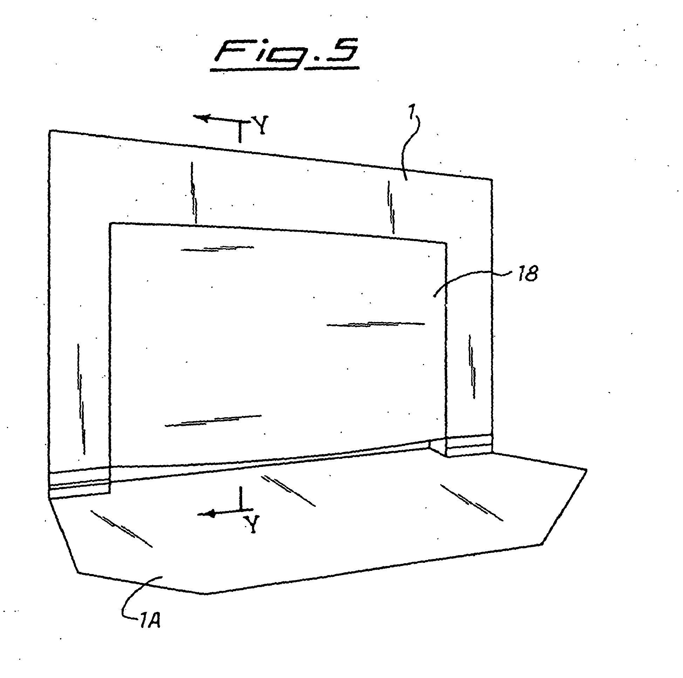

With reference to Figures 5 and 6B, these show the final result of a partly embedded installation and its cross-section respectively.

In particular it will be noted that terminal 13 of the air conditioning system is only partly embedded in space 2.

In addition to this, this terminal 13 is provided with a front panel 24 which is slightly dished in this embodiment.

With reference to the cross-sectional view in Figure 6B, it will be seen that terminal 13 is detached from base 1A at the bottom and therefore does not need appropriate grille 20, while at the top the air is expelled (arrow B in the drawing) upwards from the terminal.

It should be noted that it is also possible that structure 4 may partly project from wall 1, so that as a result at least a portion X thereof projects from space 2.

Up to now reference has been made to a structure 4 which has already been assembled in the factory, but this has the disadvantage of being bulky and therefore of occupying a considerable space both in the stores and during transport from the place of manufacture to the place where it has to be installed.

In order to overcome this disadvantage it has been provided that in another embodiment structure 4 can be assembled directly at the installation site starting from a sheet of metal or shaped plastic material using procedures in themselves known.

Transport is made easier in this way, because the dimensions are determined only by the transverse cross-section of the sheet metal or plastics material forming the structure.

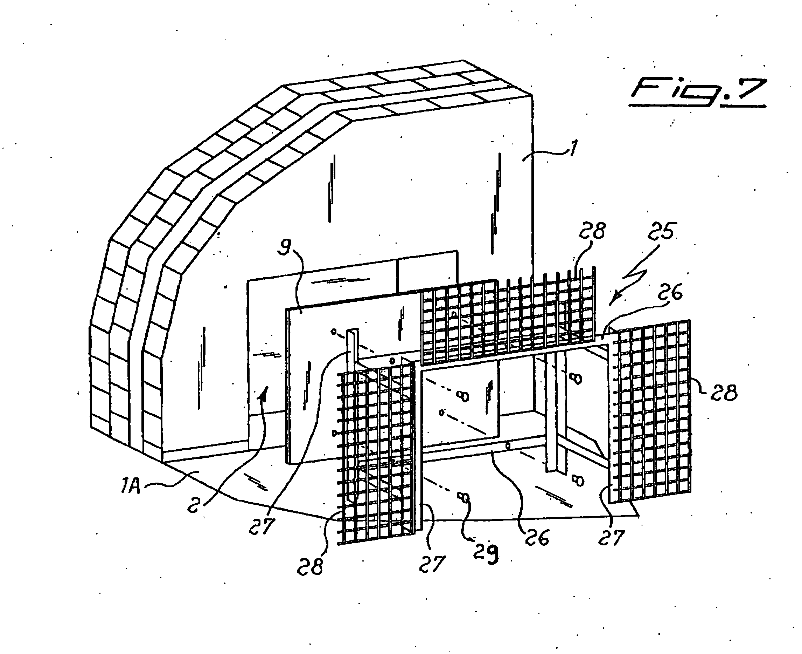

With reference to Figure 7, which illustrates an embodiment of this invention and in which the members already described are allocated the same numbers, it will be seen that a loadbearing structure 25 has been constructed using transverse members 26 and upright members 27.

These upright members 27 and transverse members 26 can be connected together in ways which are already known to a person skilled in the art.

It should also be noted that structure 25 is a modular structure in that it can be assembled using cross-pieces and uprights of different lengths or cross-pieces and uprights having the same length.

In this way installation may be effected in any type of space 2.

In fact the dimensions of the cross-pieces and the uprights may be varied at will or in accordance with measurements predetermined by the manufacturer.

There is therefore modularity in the longitudinal and transverse dimensions of the structure.

Structure 25 is rigidly connected to insulating panel 9 through fixing means 29 similar to those previously described.

Here again fixing means 29 take the form of a plurality of bolts or similar members, for example.

It will also be noted that structure 26 is provided with a plurality of members 28 projecting transversely from the perimetral edge of structure 25.

These members 28 assist the operation laying in the areas adjacent to perimetral edge 2A in order to obtain a surface finish for wall 1 when this embodiment is used which is similar to that which can be achieved by an expert mason.

In essence members 28 are laying-supporting meshes which permit the plaster to adhere to wall 1 more easily.

Again in this case a front finishing panel, a ventilating grille and a moveable deflecting fence are provided so as to hide the terminal from the user's view, as previously described with reference to Figures 1-5, 6A and 6B.

The connection between the panel and the structure is made in the same way as already described previously.

It should be noted that meshes 28 may also be advantageously applied to structure 4 previously described with reference to Figures 1-4.

Obviously in order to satisfy contingent and specific requirements a person skilled in the art may apply many modifications and variants to the configurations described above, all of which nevertheless are included within the scope of the protection of the invention as defined by the following claims.

## Claims

1. Module for allowing the finishing of a space (2) carried out in a wall (1), said space (2) being suitable to allow the wall-mounting of a terminal (13) of an air conditioning system in a removable way, the module comprising a structure (25) which can be at least partly embedded in the wall (1) in which said space (2)is formed, said structure (25) including upright members (27) and transverse members (26)attached at least to the upper extremities of the said upright members, said upright members (27) and transverse members (26) defining the perimetrical edge of the structure **characterized in that** it further includes laying supporting meshes (28) projecting transversely from the perimetrical edge of the structure (25).

2. Module according to claim 1, **characterised in that** the said upright members (27) and transverse members (26) have identical linear dimensions.

3. Module according to claim 1, **characterised in that** the said upright members (27) and transverse members (26) have different linear dimensions.

4. Module according to any of the preceding claims, **characterised in that** the said structure (25) can be enclosed at the front through a panel (18), a ventilation grille (20) and a deflecting baffle (21).

5. Module according to claim 4, **characterised in that** the said panel (18) is provided internally with a layer of sound-absorbent material.

6. Module according to claim 4, **characterised in that** the said panel (18) is connected to the perimetrical edge (2A) of the said space (2) through connecting means (19), the said means (19) comprising a plurality of pins (19A) which are inserted into a plurality of recesses (19B) made in the section of the said panel (18).

7. Module according to claim 4, **characterised in that** the said ventilation grille (20) is positioned at the bottom of said panel (18).

8. Module according to claim 4, **characterised in that** the said deflecting baffle (21) is positioned at the top of the said panel (18).

9. Module according to claims 7 and 8, **characterised in that** the said ventilation grille (20) and the said deflecting baffle (21) extend at least partly along the transverse dimension of the said panel (18).

10. Module according to claim 4, **characterised in that** the said deflecting baffle (21) can be operated manually or electrically.

11. Module according to any of claims 1 to 4, **characterised in that** an insulating panel (9) which is capable of providing thermal and/or acoustic insulation is fitted between the said structure (25) and the back (8) of the said space (2).

12. Module according to any of the preceding claims **characterised in that** the said structure (25) is a loadbearing structure.

## Patentansprüche

1. Modul für den Endausbau eines Raums (2), der in einer Wand (1) ausgeführt ist bzw. wird, wobei der Raum (2) geeignet ist, die Wandmontage eines Terminals (13) eines Klimatisierungssystems auf entfernbare Weise zu ermöglichen, wobei das Modul eine Struktur (25) umfasst, die zumindest teilweise in die Wand (1) eingebettet werden kann, in welcher der Raum (2) ausgebildet ist, wobei die Struktur (25) senkrechte Elemente (27) und Querelemente (26), die zumindest an den oberen Enden der senkrechten Elemente angebracht sind, umfasst, wobei die senkrechten Elemente (27) und die Querelemente (26) den Umfangsrand der Struktur festlegen, **dadurch gekennzeichnet, dass** sie ferner Auslege-Haltegewebe (28) umfasst, die in Querrichtung von dem Umfangsrand der Struktur (25) abstehen.

2. Modul gemäß Anspruch 1, **dadurch gekennzeichnet, dass** die senkrechten Elemente (27) und die Querelemente (26) identische Linearabmessungen aufweisen.

3. Modul gemäß Anspruch 1, **dadurch gekennzeichnet, dass** die senkrechten Elemente (27) und die Querelemente (26) unterschiedliche Linearabmessungen aufweisen.

4. Modul gemäß einem der vorstehenden Ansprüche, **dadurch gekennzeichnet, dass** die Struktur (25) an der Vorderseite durch eine Tafel (18), ein Lüftungsgitter (20) und ein Ablenkelement (21) umschlossen sein kann.

5. Modul gemäß Anspruch 4, **dadurch gekennzeichnet, dass** die Tafel (18) innen mit einer Schicht schallabsorbierenden Materials versehen ist.

6. Modul gemäß Anspruch 4, **dadurch gekennzeichnet, dass** die Tafel (18) mit dem Umfangsrand (2A) des Raums (2) durch Verbindungsmittel (19) verbunden ist, wobei die Mittel (19) mehrere Stifte (19A) umfassen, die in mehrere Ausnehmungen (19B), welche in dem Abschnitt der Tafel (18) ausgebildet sind, eingesetzt sind.

7. Modul gemäß Anspruch 4, **dadurch gekennzeichnet, dass** das Lüftungsgitter (20) an der Bodenseite der Tafel (18) positioniert ist.

8. Modul gemäß Anspruch 4, **dadurch gekennzeichnet, dass** das Ablenkelement (21) an der Oberseite der Tafel (18) positioniert ist.

9. Modul gemäß Anspruch 7 und 8, **dadurch gekennzeichnet, dass** das Lüftungsgitter (20) und das Ablenkelement (21) sich zumindest teilweise entlang der Querabmessung der Tafel (18) erstrecken.

10. Modul gemäß Anspruch 4, **dadurch gekennzeichnet, dass** das Ablenkelement (21) manuell oder elektrisch betätigt werden kann.

11. Modul gemäß einem der Ansprüche 1 bis 4, **dadurch gekennzeichnet, dass** eine Isoliertafel (9), welche thermische und/oder akustische Isolierung bietet, zwischen die Struktur (25) und die Rückseite (8) des Raums (2) eingesetzt ist.

12. Modul gemäß einem der vorstehenden Ansprüche, **dadurch gekennzeichnet, dass** die Struktur (25) eine lasttragende Struktur ist.

## Revendications

1. Module pour permettre la finition d'un espace (2) réalisé dans un mur (1), ledit espace (2) étant approprié pour permettre le montage mural d'un terminal (13) d'un système de conditionnement d'air d'une manière amovible, le module comprenant une structure (25) qui peut être au moins en partie encastrée dans le mur (1) dans lequel ledit espace (2) est formé, ladite structure (25) comprenant des éléments verticaux (27) et des éléments transversaux (26) attachés au moins aux extrémités supérieures desdits éléments verticaux, lesdits éléments verticaux (27) et lesdits éléments transversaux (26) définissant le bord périmétrique de la structure **caractérisé en ce qu'**il comprend en outre la pose de mailles de support (28) faisant saillie transversalement à partir du bord périmétrique de la structure (25).

2. Module selon la revendication 1, **caractérisé en ce que** lesdits éléments verticaux (27) et lesdits éléments transversaux (26) ont des dimensions linéaires identiques.

3. Module selon la revendication 1, **caractérisé en ce que** lesdits éléments verticaux (27) et lesdits éléments transversaux (26) ont des dimensions linéaires différentes.

4. Module selon l'une quelconque des revendications précédentes, **caractérisé en ce que** ladite structure (25) peut être fermée à l'avant par un panneau (18), une grille de ventilation (20) et un déflecteur (21).

5. Module selon la revendication 4, **caractérisé en ce que** ledit panneau (28) est muni de manière interne d'une couche de matériau d'insonorisation.

6. Module selon la revendication 4, **caractérisé en ce que** ledit panneau (18) est relié au bord périmétrique (2A) dudit espace (2) par des moyens de raccordement (19), lesdits moyens (19) comprenant une pluralité de broches (19A) qui sont insérées dans une pluralité d'évidements (19B) faits dans la section dudit panneau (18).

7. Module selon la revendication 4, **caractérisé en ce que** ladite grille de ventilation (20) est positionnée au fond dudit panneau (18).

8. Module selon la revendication 4, **caractérisé en ce que** ledit déflecteur (21) est positionné au sommet dudit panneau (18).

9. Module selon les revendications 7 et 8, **caractérisé en ce que** ladite grille de ventilation (20) et ledit déflecteur (21) s'étendent au moins en partie le long de la dimension transversale dudit panneau (18).

10. Module selon la revendication 4, **caractérisé en ce que** ledit déflecteur (21) peut être actionné manuellement ou électriquement.

11. Module selon l'une quelconque des revendications 1 à 4, **caractérisé en ce qu'**un panneau isolant (9) qui est capable de fournir une isolation thermique et/ou acoustique est monté entre ladite structure (25) et l'arrière (8) dudit espace (2).

12. Module selon l'une quelconque des revendications précédentes, **caractérisé en ce que** ladite structure (25) est une structure porteuse.
